# EUROPÄISCHE PATENTSCHRIFT

(11) **EP 2 014 442 B1**
(45) Veröffentlichungstag und Bekanntmachung des Hinweises auf die Patenterteilung: **18.05.2011**
(21) Anmeldenummer: 08009434.5
(22) Anmeldetag: 23.05.2008
(51) Int. Cl.: B29C 45/50, F16H 25/20

(54) **Elektrische Spritzgusseinrichtung für Kunststoff-Spritzgusspressen**
Electrical injection moulding device for plastic injection moulding presses
Dispositif électrique de moulage par injection pour presses de moulage par injection en matière synthétique

(30) Priorität: 13.06.2007 DE 102007027212
(43) Veröffentlichungstag der Anmeldung: 14.01.2009
(73) Patentinhaber: AMK Arnold Müller GmbH & Co.KG, 73230 Kirchheim / Teck (DE)
(72) Erfinder: Gause, Alfred, 73666 Hohengehren (DE)
(74) Vertreter: Kratzsch, Volkhard

(56) Entgegenhaltungen:
- CH-A5- 586 583
- DE-A1- 4 344 335
- DE-U1-202006 008 267
- JP-A- 2002 327 823
- US-A1- 2004 228 944

## Beschreibung

Die Erfindung bezieht sich auf eine elektrische Spritzgusseinrichtung für Kunststoff-Spritzgusspressen mit den Merkmalen im Oberbegriff des Anspruchs 1 und aus DE 43 44 335 A1.

Aus der CH 586 583 A5 ist ein Spindelkopf mit motorisch gesteuertem Vorschub und Rückzug einer Spindel für den Antrieb eines Spiralbohrers bekannt, bei dem die Spindel zwei axial benachbarte Gewindeabschnitte mit zueinander gegensinnigem Gewindeverlauf aufweist. Mit jedem Gewindeabschnitt steht eine darauf sitzende Spindelmutter über ein zugeordnetes Innengewinde in Eingriff. Jede Spindelmutter ist über einen jeweils eigenen Antriebsmotor, insbesondere Elektromotor, antreibbar.

Der Erfindung liegt die Aufgabe zugrunde, eine elektrische Spritzgusseinrichtung für Kunststoff-Spritzgusspressen der eingangs genannten Art so auszubilden, dass eine verbesserte Antriebsbewegung auf die Antriebsspindel und damit gekuppelte Plastifizierschnecke bei möglichst geringem Aufwand erreicht wird.

Die Aufgabe ist bei einer elektrischen Spritzgusseinrichtung für Kunststoff-Spritzgusspressen der eingangs genannten Art gemäß der Erfindung durch die Merkmale im Anspruch 1 gelöst. Weitere vorteilhafte Erfindungsmerkmale sowie Ausgestaltungen ergeben sich aus den Unteransprüchen. Durch die erfindungsgemäße Gestaltung ist es möglich, an der Antriebsspindel unterschiedliche Drehgeschwindigkeiten und/oder Antriebsmomente zu erzeugen, und dies in einfacher und kostengünstiger Weise unter Beibehaltung der ansonsten gegebenen Vorteile einer Antriebseinrichtung, wie sie im Oberbegriff des Anspruchs 1 beschrieben ist.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus den Zeichnungen entnehmbaren Merkmale weitere Bestandteile der Erfindung, auch wenn sie nicht besonders hervorgehoben und insbesondere nicht in den Ansprüchen erwähnt sind.

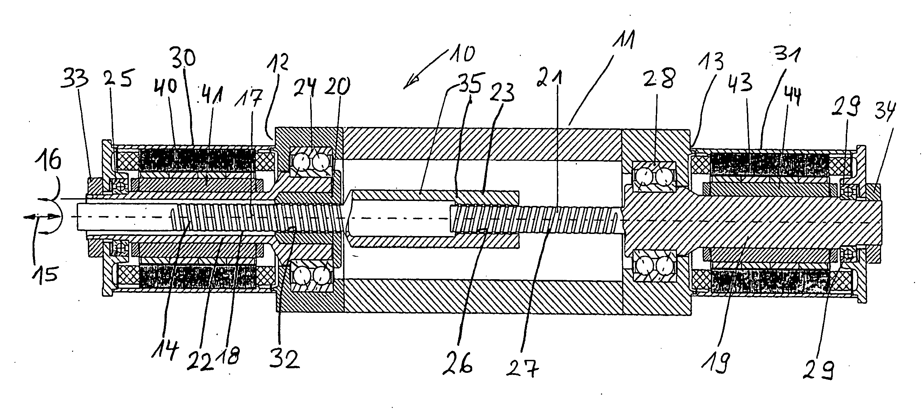

Die Erfindung ist nachfolgend anhand eines in der Zeichnung gezeigten Ausführungsbeispieles näher erläutert. Die Zeichnung zeigt einen schematischen axialen Längsschnitt des Antriebsteils einer elektrischen Spritzgusseinrichtung.

In der Zeichnung ist von einer ansonsten nicht weiter dargestellten elektrischen Spritzgusseinrichtung 10 für Kunststoff-Spritzgusspressen eine dieser Einrichtung 10 zugeordnete Antriebseinrichtung 11 gezeigt. Eine derartige Spritzgusseinrichtung 10 weist üblicherweise einen die Antriebseinrichtung 11 aufnehmenden Maschinenrahmen, ferner einen Zylinder und im Inneren des Zylinders eine Plastifizierschnecke auf, zu der die Antriebseinrichtung 11 koaxial angeordnet sein kann, wobei die Plastifizierschnecke eine Drehbewegung um ihre eigene Achse zum Plastifizieren des über einen Trichter eingeführten Kunststoffmaterials, ferner eine vorwärts gerichtete translatorische Bewegung zum Einspritzen des geschmolzenen Materials sowie eine rückwärts gerichtete translatorische Bewegung zur Gewährleistung einer Zufuhr des Materials aus dem Trichter vollführt. Zusätzlich zu der reinen Drehbewegung um die Längsmittelachse und der vorwärts und rückwärts gerichteten translatorischen Bewegung in Richtung der Längsmittelachse vollführt die nicht dargestellte Plastifizierschnecke auch noch eine translatorische Drehbewegung um die eigene Achse vorwärts und rückwärts. Die Antriebseinrichtung 11 dient dazu, für diese Funktionen die Plastifizierschnecke, die koaxial zur Antriebseinrichtung 11 ausgerichtet ist, anzutreiben.

Die Antriebseinrichtung 11 weist ein z.B. zweiteiliges Gehäuse 12, 13 und darin eine Antriebsspindel 14 auf, die mit ihrem in der Zeichnung linken Ende entweder unmittelbar in die Plastifizierschnecke übergehen oder mit dieser über ein nicht gezeigtes Gelenk, eine Kupplung od.dergl. verbunden bzw. verbindbar sein kann. Die translatorische Vorschubbewegung der Antriebsspindel 14 für die Plastifizierschnecke vor und zurück ist durch einen Pfeil 15 angedeutet, während die Drehbewegung um die eigene Achse im einen oder anderen Drehsinn durch einen Pfeil 16 angedeutet ist. Die translatorische Drehbewegung um die eigene Achse ist bei einer Kombination der Pfeile 15 und 16 gegeben.

Die Antriebsspindel 14 weist einen axial gerichteten Gewindeabschnitt 18 auf, der z.B. Linksgewinde hat. Dem Gewindeabschnitt 18 ist eine Spindelmutter 20 zugeordnet. Die Spindelmutter 20 ist mit entsprechendem Innengewinde 32 versehen und sitzt auf dem Gewindeabschnitt 18. Die Spindelmutter 20 ist drehfest mit einer zur Antriebsspindel 14 koaxialen Hülse 22 verbunden und mittels eines Lagers 24 in Bezug auf das Gehäuse 12 drehbar gelagert. Das Lager 24 ist beispielsweise als Schrägkugellager ausgebildet, das in der Lage ist, radiale und axiale Kräfte aufzunehmen, die von der Spindelmutter 20 auf die damit drehfeste Hülse 22 übertragen werden. Die Hülse 22 ist mit ihrem in der Zeichnung linken Endbereich mittels eines zweiten Lagers 25 drehbar gelagert, das hier z.B. als Radiallager in Form eines Rillenlagers ausgebildet ist.

Im Gehäuse 13 ist eine zur Antriebsspindel 14 koaxiale Spindel 19 drehbar gelagert, jedoch axial unverschiebbar. Die Spindel 19 wirkt mit der Antriebsspindel 14 zusammen. Zu diesem Zweck sind die Antriebsspindel 14 und die Spindel 19 miteinander z. B. mittels einer Gewindeverbindung derart getrieblich gekoppelt, dass die translatorischen und rotatorischen Bewegungen in beiden Richtungen von der Antriebsspindel 14 auf die Plastifizierschnecke übertragbar sind. Diese getriebliche Kopplung erfolgt mittels eines Gewindeabschnitts 21 mit einem Außengewinde 27 einerseits und mittels einer Mutter 23 mit Innengewinde 26 andererseits, die mit ihrem Innengewinde 26 in Eingriff mit dem Außengewinde 27 des Gewindeabschnitts 21 steht. Der Gewindeabschnitt 21 ist koaxial zur Mutter 23 angeordnet. Die Mutter 23 ist an einer Hohlspindel 35 vorgesehen bzw. selbst als Hohlspindel 35 ausgebildet, in die der Gewindeabschnitt 21 eingreift, der von der Hohlspindel 35 übergriffen wird.

Das Außengewinde 27 des Gewindeabschnitts 21 und das zugeordnete Innengewinde 26 der Mutter 23 weisen einen zum Gewindeverlauf des Außengewindes 17 des Gewindeabschnitts 18 und des zugeordneten Innengewindes 32 der Spindelmutter 20 gegensinnigen Gewindeverlauf auf. Wenn der Gewindeabschnitt 18 z. B. Linksgewinde hat, dann hat der andere Gewindeabschnitt 21 z. B. Rechtsgewinde.

Beim gezeigten Ausführungsbeispiel ist die Mutter 23 mit Innengewinde 26 fester, z. B. einstückiger, Teil der Antriebsspindel 14. Der Gewindeabschnitt 21 mit Außengewinde 27 ist fester, z. B. einstückiger, Teil der Spindel 19. Die Verhältnisse können auch umgekehrt und derart gewählt sein, dass der Gewindeabschnitt 21 mit Außengewinde 27 statt dessen Teil, z. B. Verlängerung, der Antriebsspindel 14 ist, während die Mutter 23 Teil der Spindel 19 ist. Die Spindel 19 ist drehbar, jedoch axial unverschiebbar, gehalten, während die Antriebsspindel 14 drehbar und axial beweglich gehalten ist.

Die Spindel 19 ist mit ihrem in der Zeichnung linken Ende mittels eines Lagers 28 z.B. in Form eines Schrägkugellagers und mit ihrem rechten Ende mittels eines Lagers 29 in Form eines Radiallagers im Gehäuse 13 drehbar gelagert.

Der Spindelmutter 20 ist zu deren Drehantrieb ein Antriebsmotor 30 zugeordnet, der insbesondere als Elektromotor ausgebildet ist und einen Stator 40 und Rotor 41 aufweist. Die Hülse 22 kann Träger des Rotors 41 sein oder selbst als entsprechender Rotor 41 ausgebildet sein. Der Spindel 19 ist zu deren Drehantrieb ein Antriebsmotor 31, insbesondere Elektromotor, zugeordnet. Der Antriebsmotor 31 treibt die Spindel 19 entweder über ein nicht gezeigtes Untersetzungsgetriebe oder direkt mit seinem Rotor 44 an, der innerhalb des Stators 43 umläuft. Der Rotor 44 ist von der Spindel 19 koaxial durchsetzt und mit dieser drehfest verbunden, so dass die Spindel 19 mit dem Rotor 44 zusammen umläuft. Die Spindelmutter 20 ist mittels des zugeordneten Antriebsmotors 30 drehbar, jedoch axial unverschiebbar angeordnet, so dass eine Drehbetätigung der Spindelmutter 20 und der Spindel 19 zu einem Translationsantrieb und/oder Drehantrieb der Antriebsspindel 14 und damit der nicht gezeigten Plastifizierschnecke führt. Es sind immer beide Antriebsmotoren 30, 31 im Eingriff, so dass je nach Drehrichtung und Drehzahl eine reine Drehbewegung der Antriebsspindel 14 in der einen oder anderen Richtung gemäß Pfeil 16 und/oder eine translatorische Bewegung in Pfeilrichtung 15 die Folge sind.

Man erkennt, dass die Antriebsspindel 14 und ferner beispielsweise auch die Spindel 19 auf zwei axial beabstandeten Bereichen im Gehäuse 12, 13 drehbar gelagert sind. Statt des jeweiligen Schrägkugellagers als Lager 24, 28 am rechten Ende der Antriebsspindel 14 bzw. als Lager am linken Ende der Spindel 19 können statt dessen auch Axialpendelrollenlager oder sonstige Lagereinrichtungen, die axiale und radiale Kräfte aufnehmen, vorgesehen sein. Man erkennt, dass der Gewindeabschnitt 21 mit Außengewinde 27 sowie die Mutter 23 mit Innengewinde 26 in Axialrichtung betrachtet von dem sich zwischen zwei Lagerstellen 28, 29 bzw. 24, 25 erstreckenden Bereichen abstreben. Der Gewindeabschnitt 21 strebt dabei nach links und die Hohlspindel 35 und Mutter 23 gegensinnig axial nach rechts ab. Der Gewindeabschnitt 21 kragt somit, ausgehend von der Lagerstelle mit dem Lager 28, axial nach links aus. Die Hohlspindel 35 mit Mutter 23 kragt ausgehend von der Lagerstelle mit dem Lager 24 axial nach rechts aus. Dabei ist der Gewindeabschnitt 21 mit Außengewinde 27 als sich links an das Ende der Spindel 19 anschließender Endabschnitt der Spindel 19 ausgebildet. Die Mutter 23, insbesondere Hohlspindel 35 mit Mutter 23, ist als sich rechts an die Antriebsspindel 14 axial anschließender Endabschnitt dieser ausgebildet. Der Außendurchmesser des Gewindeabschnitts 21 mit Außengewinde 27 kann z. B. etwa dem Außendurchmesser der Antriebsspindel 14, insbesondere des Gewindeabschnitts 18 dieser, entsprechen.

Die Gewindesteigung des Gewindeabschnitts 18 und dessen Spindelmutter 20 kann größer oder kleiner bemessen sein als diejenige des Gewindeabschnitts 21 mit Außengewinde 27 und zugeordneter Mutter 23.

Die Spindelmutter 20 und/oder die Mutter 23 kann als Kugelumlaufschraube, Planetenrollenschraube, Gleitschraube od.dgl. ausgebildet sein. Die Antriebsmotoren 30, 31, z.B. Elektromotoren, können die Spindelmutter 20 bzw. die Spindel 19 entweder direkt antreiben oder der Drehantrieb dieser erfolgt über zugeordnete Untersetzungsgetriebe, die ihrerseits vom jeweiligen Antriebsmotor 30, 31 angetrieben sind. Die Antriebsmotoren 30, 31, insbesondere Elektromotoren, können hinsichtlich der Geschwindigkeit und des Drehmoments geregelt sein, wozu z.B. am linken Ende der Hülse 22 ein darauf drehfest angeordneter Sensor 33 und am in der Zeichnung rechten Ende der Spindel 19 ein am dortigen Ende angebrachter Lagegeber (Encoder) 34 vorgesehen sein können. Bei einem anderen, nicht gezeigten Ausführungsbeispiel befindet sich der Sensor 33 bzw. 34 nicht auf der Hülse 22 bzw. Spindel 19, sondern er ist in der Ausbildung als Standardgeber über einen Zahnriemen od.dgl. Übertragungsmittel von der zugeordneten Spindelmutter 20, z.B. Hülse 22, bzw. Spindel 19 antreibbar.

Man erkennt, dass der für den Translationsantrieb und den Drehantrieb der nicht weiter gezeigten Plastifizierschnecke vorgesehene, jeweils auf die Antriebsspindel 14 arbeitende Antrieb mit der Spindelmutter 20 und mit der Spindel 19, dem Gewindeabschnitt 21 und der Mutter 23 und zugeordneten Antriebsmotoren 30 bzw. 31 einfach, kostengünstig und in hohem Maße effektiv und energiesparend ist. Es sind jeweils nur geringe Massen zu beschleunigen und zu verzögern, weswegen bei Bedarf auch große Geschwindigkeiten, jedoch bei Bedarf auch große Kräfte, erreichbar sind. Von Vorteil ist ferner, dass die jeweiligen Bewegungen der Antriebsspindel 14 frei gestaltet und gewählt werden können. Allein durch entsprechende Programmierung der nicht gezeigten Steuereinrichtung für die Antriebsmotoren 30, 31 und Umprogrammierung dieser lässt sich schnell und einfach eine Änderung der Bewegungen in Längsrichtung und/oder in Drehrichtung einstellen.

## Patentansprüche

1. Elektrische Spritzgusseinrichtung für Kunststoff-Spritzgusspressen, mit einer Antriebsspindel (14) zum Antrieb einer Plastifizierschnecke derart, dass diese eine translatorische Vorschubbewegung während des Einspritzens von Kunststoffmaterial in einen Formhohlraum und eine Drehbewegung um die eigene Achse sowie eine translatorische Drehbewegung um die eigene Achse und eine Rückfahrbewegung während der Plastifizierungsphase des Kunststoffmaterials vollführt, wobei die Antriebsspindel (14) einen Gewindeabschnitt (18) mit einem Außengewinde (17) aufweist, mit dem eine Spindelmutter (20) mit einem zugeordneten Innengewinde (32) in Eingriff steht, die über einen Antriebsmotor (30), insbesondere Elektromotor, antreibbar ist, und mit einer von einem zugeordneten Antriebsmotor (31), insbesondere Elektromotor, drehend angetriebenen Spindel (19), die mit der Antriebsspindel (14) zusammenwirkt,
**dadurch gekennzeichnet,**
**dass** die Antriebsspindel (14) und die Spindel (19) miteinander getrieblich gekoppelt sind, derart, dass die translatorischen und rotatorischen Bewegungen in beiden Richtungen auf die Plastifizierschnecke übertragbar sind.

2. Elektrische Spritzgusseinrichtung nach Anspruch 1,
**dadurch gekennzeichnet,**
**dass** die getriebliche Kopplung mittels einer Gewindeverbindung erfolgt, vorzugsweise mittels eines Gewindeabschnitts (21) mit einem Außengewinde (27) einerseits und einer Mutter (23) mit Innengewinde (26) andererseits, die mit ihrem Innengewinde (26) in Eingriff mit dem Außengewinde (27) des Gewindeabschnitts (21) steht.

3. Elektrische Spritzgusseinrichtung nach Anspruch 2,
**dadurch gekennzeichnet,**
**dass** der Gewindeabschnitt (21) koaxial zur Mutter (23) angeordnet ist.

4. Elektrische Spritzgusseinrichtung nach Anspruch 2 oder 3,
**dadurch gekennzeichnet,**
**dass** die Mutter (23) an einer Hohlspindel (35) vorgesehen oder selbst als Hohlspindel (35) ausgebildet ist, in die der Gewindeabschnitt (21) eingreift, der von der Hohlspindel (35) übergriffen wird.

5. Elektrische Spritzgusseinrichtung nach einem der Ansprüche 2 bis 4,
**dadurch gekennzeichnet,**
**dass** das Außengewinde (27) des Gewindeabschnitts (21) und das zugeordnete Innengewinde (26) der Mutter (23) einen zum Gewindeverlauf des Außengewindes (17) der Antriebsspindel (14) und des zugeordneten Innengewindes (32) der Spindelmutter (20) gegensinnigen Gewindeverlauf aufweist.

6. Elektrische Spritzgusseinrichtung nach einem der Ansprüche 2 bis 5,
**dadurch gekennzeichnet ,**
**dass** die Mutter (23) mit Innengewinde (26) fester, z.B. einstückiger, Teil der Antriebsspindel (14) und der Gewindeabschnitt (21) mit Außengewinde (27) fester, z.B. einstückiger, Teil der Spindel (19) ist, oder umgekehrt derart, dass die Mutter (23) Teil der Spindel (19) und der Gewindeabschnitt (21) mit Außengewinde (27) Teil der Antriebsspindel (14) ist.

7. Elektrische Spritzgusseinrichtung nach einem der Ansprüche 1 bis 6,
**dadurch gekennzeichnet,**
**dass** die Spindel (19) drehbar jedoch axial unbeweglich gehalten ist.

8. Elektrische Spritzgusseinrichtung nach einem der Ansprüche 1 bis 7,
**dadurch gekennzeichnet,**
**dass** die Antriebsspindel (14) drehbar und axial beweglich gehalten ist.

9. Elektrische Spritzgusseinrichtung nach einem der Ansprüche 1 bis 8,
**dadurch gekennzeichnet,**
**dass** der Antriebsmotor (31), insbesondere Elektromotor, die Spindel (19) über ein Untersetzungsgetriebe oder direkt mit seinem Rotor (44) antreibt, der von der Spindel (19) koaxial durchsetzt und damit drehfest verbunden ist.

10. Elektrische Spritzgusseinrichtung nach einem der Ansprüche 1 bis 9,
**dadurch gekennzeichnet,**
**dass** die Antriebsspindel (14) und/oder die Spindel (19) auf zwei axial beabstandeten Bereichen im Gehäuse (12,13) drehbar gelagert sind.

11. Elektrische Spritzgusseinrichtung nach Anspruch 10,
**dadurch gekennzeichnet,**
**dass** die Lagerung jeweils zumindest ein Schrägkugellager oder ein Axialpendelrollenlager oder eine sonstige Lagereinrichtung (24,28), die axiale und radiale Kräfte aufnimmt, aufweist.

12. Elektrische Spritzgusseinrichtung nach einem der Ansprüche 2 bis 11,
**dadurch gekennzeichnet,**
**dass** der Gewindeabschnitt (21) mit Außengewinde (27) und/oder die Mutter (23) mit Innengewinde (26) in Axialrichtung von dem sich zwischen zwei Lagerstellen (28,29 bzw. 25,24) erstreckenden Bereich abstreben und axial aufeinanderzu gerichtet sind.

13. Elektrische Spritzgusseinrichtung nach Anspruch 12,
**dadurch gekennzeichnet,**
**dass** der Gewindeabschnitt (21) mit Außengewinde (27) und/oder die Mutter (23) mit Innengewinde (26) von demjenigen Lagerbereich, dessen Lagereinrichtung (24,28) axiale und radiale Kräfte aufnimmt, ausgehend axial abstrebt.

14. Elektrische Spritzgusseinrichtung nach einem der Ansprüche 12 bis 13,
**dadurch gekennzeichnet,**
**dass** der Gewindeabschnitt (21) mit Außengewinde (27) und/oder die Mutter (23) mit Innengewinde (26) als sich an die Spindel (19) bzw. an die Antriebsspindel (14) anschließender Endabschnitt dieser ausgebildet sind.

15. Elektrische Spritzgusseinrichtung nach einem der Ansprüche 2 bis 14,
**dadurch gekennzeichnet ,**
**dass** der Außendurchmesser des Gewindeabschnitts (21) mit Außengewinde (27) etwa dem Außendurchmesser der Antriebsspindel (14), insbesondere deren Gewindeabschnitt (18), entspricht.

16. Elektrische Spritzgusseinrichtung nach einem der Ansprüche 1 bis 15,
**dadurch gekennzeichnet ,**
**dass** die Gewindesteigung des Gewindeabschnitts (18) und dessen Spindelmutter (20) größer oder kleiner ist als diejenige des Gewindeabschnitts (21) mit Außengewinde (27) und zugeordneter Mutter (23).

17. Elektrische Spritzgusseinrichtung nach einem der Ansprüche 1 bis 16,
**dadurch gekennzeichnet ,**
**dass** die Spindelmutter (20) und/oder die Mutter (23) als Kugelumlaufschraube, Planetenrollenschraube, Gleitschraube od.dgl. ausgebildet sind.

18. Elektrische Spritzgusseinrichtung nach einem der Ansprüche 1 bis 17,
**dadurch gekennzeichnet,**
**dass** der Antriebsmotor (30), insbesondere Elektromotor, die Spindelmutter (20) über ein Untersetzungsgetriebe oder direkt mit seinem Rotor (41) antreibt, der von der Spindelmutter (20) oder einer Hülse (22) dieser durchsetzt ist.

19. Elektrische Spritzgusseinrichtung nach einem der Ansprüche 1 bis 18,
**dadurch gekennzeichnet,**
**dass** die Antriebsspindel (14) mit der Plastifizierschnecke über ein Gelenk oder eine Kupplung verbunden oder verbindbar ist.

20. Elektrische Spritzgusseinrichtung nach einem der Ansprüche 1 bis 19,
**dadurch gekennzeichnet,**
**dass** die Antriebsmotoren (30,31), insbesondere Elektromotoren, hinsichtlich der Geschwindigkeit und des Drehmoments durch entsprechende Sensoren (33), Encoder (34) od.dgl. geregelt sind.

21. Elektrische Spritzgusseinrichtung nach Anspruch 20,
**dadurch gekennzeichnet,**
**dass** zumindest einer der Sensoren (33,34) über einen Zahnriemen od.dgl. Übertragungsmittel von der zugeordneten Spindelmutter (20) bzw. Spindel (19) antreibbar ist.

## Claims

1. Electrical injection-moulding device for plastics injection presses, with a drive spindle (14) for driving a plasticizing screw in such a way that it performs a translatory advancing movement during the injection of plastics material into a mould cavity and a rotating movement about its own axis and a translatory rotating movement about its own axis and a reversing movement during the plasticizing phase of the plastics material, the drive spindle (14) having a threaded portion (18) with an external thread (17), with which a spindle nut (20) with an assigned internal thread (32) is in engagement and can be driven by means of a drive motor (30), in particular an electric motor, and with a spindle (19), which is driven in a rotating manner by an assigned drive motor (31), in particular an electric motor, and interacts with the drive spindle (14), **characterized in that** the drive spindle (14) and the spindle (19) are mechanically coupled to each other in such a way that the translatory and rotary movements in both directions can be transferred to the plasticizing screw.

2. Electrical injection-moulding device according to Claim 1, **characterized in that** the mechanical coupling takes place by means of a threaded connection, preferably by means of a threaded portion (21) with an external thread (27) on the one hand and a nut (23) with an internal thread (26) on the other hand, which with its internal thread (26) is in engagement with the external thread (27) of the threaded portion (21).

3. Electrical injection-moulding device according to Claim 2, **characterized in that** the threaded portion (21) is arranged coaxially in relation to the nut (23).

4. Electrical injection-moulding device according to Claim 2 or 3, **characterized in that** the nut (23) is provided on a hollow spindle (35) or is formed itself as a hollow spindle (35), in which the threaded portion (21) over which the hollow spindle (35) extends engages.

5. Electrical injection-moulding device according to one of Claims 2 to 4, **characterized in that** the external thread (27) of the threaded portion (21) and the assigned internal thread (26) of the nut (23) have a thread profile opposite to the thread profile of the external thread (17) of the drive spindle (14) and of the associated internal thread (32) of the spindle nut (20).

6. Electrical injection-moulding device according to one of Claims 2 to 5, **characterized in that** the nut (23) with the internal thread (26) is a fixed, for example one-piece, part of the drive spindle (14) and the threaded portion (21) with the external thread (27) is a fixed, for example one-piece, part of the spindle (19), or vice versa, such that the nut (23) is part of the spindle (19) and the threaded portion (21) with the external thread (27) is part of the drive spindle (14).

7. Electrical injection-moulding device according to one of Claims 1 to 6, **characterized in that** the spindle (19) is held such that it is rotatable but axially immovable.

8. Electrical injection-moulding device according to one of Claims 1 to 7, **characterized in that** the drive spindle (14) is held such that it is rotatable and axially movable.

9. Electrical injection-moulding device according to one of Claims 1 to 8, **characterized in that** the drive motor (31), in particular an electric motor, drives the spindle (19) by means of a reduction gear mechanism or directly by its rotor (44), which is passed through coaxially by the spindle (19) and connected thereto in a rotationally fixed manner.

10. Electrical injection-moulding device according to one of Claims 1 to 9, **characterized in that** the drive spindle (14) and/or the spindle (19) are rotatably mounted on two axially spaced-apart regions in the housing (12, 13).

11. Electrical injection-moulding device according to Claim 10, **characterized in that** the mounting respectively comprises at least one angular ball bearing or a self-aligning roller thrust bearing or some other bearing device (24, 28) which accepts axial and radial forces.

12. Electrical injection-moulding device according to one of Claims 2 to 11, **characterized in that** the threaded portion (21) with the external thread (27) and/or the nut (23) with the internal thread (26) protrude in the axial direction away from the region extending between two bearing locations (28, 29 and 25, 24, respectively) and are directed axially towards each other.

13. Electrical injection-moulding device according to Claim 12, **characterized in that** the threaded portion (21) with the external thread (27) and/or the nut (23) with the internal thread (26) protrude axially away from that bearing region of which the bearing device (24, 28) accepts axial and radial forces.

14. Electrical injection-moulding device according to either of Claims 12 and 13, **characterized in that** the threaded portion (21) with the external thread (27) and/or the nut (23) with the internal thread (26) are formed as an adjoining end portion of the spindle (19) or of the drive spindle (14), respectively.

15. Electrical injection-moulding device according to one of Claims 2 to 14, **characterized in that** the outside diameter of the threaded portion (21) with the external thread (27) corresponds approximately to the outside diameter of the drive spindle (14), in particular the threaded portion (18) thereof.

16. Electrical injection-moulding device according to one of Claims 1 to 15, **characterized in that** the thread pitch of the threaded portion (18) and of the spindle nut (20) thereof is greater or less than that of the threaded portion (21) with the external thread (27) and the assigned nut (23).

17. Electrical injection-moulding device according to one of Claims 1 to 16, **characterized in that** the spindle nut (20) and/or the nut (23) are formed as a recirculating ball screw, planetary roller screw, sliding screw or the like.

18. Electrical injection-moulding device according to one of Claims 1 to 17, **characterized in that** the drive motor (30), in particular an electric motor, drives the spindle nut (20) by means of a reduction gear mechanism or directly by its rotor (41), which is passed through by the spindle nut (20) or a sleeve (22) thereof.

19. Electrical injection-moulding device according to one of Claims 1 to 18, **characterized in that** the drive spindle (14) is connected or can be connected to the plasticizing screw by means of a joint or a coupling.

20. Electrical injection-moulding device according to one of Claims 1 to 19, **characterized in that** the drive motors (30, 31), in particular electric motors, are controlled with respect to the speed and the torque by corresponding sensors (33), encoders (34) or the like.

21. Electrical injection-moulding device according to Claim 20, **characterized in that** at least one of the sensors (33, 34) can be driven by the assigned spindle nut (20) or spindle (19) by means of a toothed belt or similar transmission means.

## Revendications

1. Dispositif de moulage par injection électrique pour presses de moulage par injection de plastique, comprenant une broche d'entraînement (14) pour l'entraînement d'une vis de plastification, de telle sorte que celle-ci effectue un mouvement d'avance en translation pendant l'injection du matériau plastique dans une cavité de moule, et un mouvement de rotation autour de son axe propre ainsi qu'un mouvement de rotation et de translation autour de son axe propre et un mouvement de retour pendant la phase de plastification du matériau plastique, la broche d'entraînement (14) présentant une portion filetée (18) avec un filetage extérieur (17), avec lequel s'engage un écrou de broche (20) ayant un filetage intérieur associé (32), lequel écrou de broche peut être entraîné par un moteur d'entraînement (30), en particulier un moteur électrique, et comprenant une broche (19) entraînée en rotation par un moteur d'entraînement associé (31), en particulier un moteur électrique, laquelle broche (19) coopère avec la broche d'entraînement (14),
**caractérisé en ce que**
la broche d'entraînement (14) et la broche (19) sont accouplées l'une à l'autre par transmission, de telle sorte que les mouvements de translation et de rotation dans les deux sens puissent être transmis à la vis de plastification.

2. Dispositif de moulage par injection électrique selon la revendication 1,
**caractérisé en ce que**
l'accouplement par transmission a lieu au moyen d'une connexion filetée, de préférence au moyen d'une portion filetée (21) avec un filetage extérieur (27) d'une part et un écrou (23) avec un filetage intérieur (26) d'autre part, qui est en prise avec son filetage intérieur (26) avec le filetage extérieur (27) de la portion filetée (21).

3. Dispositif de moulage par injection électrique selon la revendication 2,
**caractérisé en ce que**
la portion filetée (21) est disposée coaxialement à l'écrou (23).

4. Dispositif de moulage par injection électrique selon la revendication 2 ou 3,
**caractérisé en ce que**
l'écrou (23) est prévu sur une broche creuse (35) ou est réalisé lui-même sous forme de broche creuse (35), dans laquelle s'engage la portion filetée (21), qui est engagée par le dessus par la broche creuse (35).

5. Dispositif de moulage par injection électrique selon l'une quelconque des revendications 2 à 4,
**caractérisé en ce que**
le filetage extérieur (27) de la portion filetée (21) et le filetage intérieur associé (26) de l'écrou (23) présentent une progression de filetage en sens inverse de la progression de filetage du filetage extérieur (17) de la broche d'entraînement (14) et du filetage intérieur associé (32) de l'écrou de broche (20).

6. Dispositif de moulage par injection électrique selon l'une quelconque des revendications 2 à 5,
**caractérisé en ce que**
l'écrou (23) avec le filetage intérieur (26) constitue une partie fixe, par exemple d'une seule pièce, de la broche d'entraînement (14) et la portion filetée (21) avec le filetage extérieur (27) constitue une partie fixe, par exemple d'une seule pièce, de la broche (19), ou inversement, de telle sorte que l'écrou (23) fasse partie de la broche (19) et que la portion filetée (21) avec le filetage extérieur (27) fasse partie de la broche d'entraînement (14).

7. Dispositif de moulage par injection électrique selon l'une quelconque des revendications 1 à 6,
**caractérisé en ce que**
la broche (19) est maintenue à rotation mais toutefois de manière immobile axialement.

8. Dispositif de moulage par injection électrique selon l'une quelconque des revendications 1 à 7,
**caractérisé en ce que**
la broche d'entraînement (14) est maintenue de manière mobile en rotation et axialement.

9. Dispositif de moulage par injection électrique selon l'une quelconque des revendications 1 à 8,
**caractérisé en ce que**
le moteur d'entraînement (31), en particulier le moteur électrique, entraîne la broche (19) par le biais d'un réducteur ou directement avec son rotor (44), qui est traversé coaxialement directement par la broche (19) et est ainsi connecté de manière solidaire en rotation à celle-ci.

10. Dispositif de moulage par injection électrique selon l'une quelconque des revendications 1 à 9,
**caractérisé en ce que**
la broche d'entraînement (14) et/ou la broche (19) sont montées à rotation sur deux régions espacées axialement dans le boîtier (12, 13).

11. Dispositif de moulage par injection électrique selon la revendication 10,
**caractérisé en ce que**
le support sur palier présente à chaque fois au moins un roulement à billes à contact oblique ou un roulement à rouleaux articulés axial, ou un autre système de palier (24, 28), qui reçoit des forces axiales et radiales.

12. Dispositif de moulage par injection électrique selon l'une quelconque des revendications 2 à 11,
**caractérisé en ce que**
la portion filetée (21) avec le filetage extérieur (27) et/ou l'écrou (23) avec le filetage intérieur (26) s'appuient depuis la région s'étendant entre deux points de palier (28, 29, respectivement 25, 24) et sont orientés axialement l'un vers l'autre.

13. Dispositif de moulage par injection électrique selon la revendication 12,
**caractérisé en ce que**
la portion de filetage (21) avec le filetage extérieur (27) et/ou l'écrou (23) avec le filetage intérieur (26) s'appuient axialement depuis la région de palier dont le système de palier (24, 28) reçoit des forces axiales et radiales.

14. Dispositif de moulage par injection électrique selon l'une quelconque des revendications 12 à 13,
**caractérisé en ce que**
la portion filetée (21) avec le filetage extérieur (27) et/ou l'écrou (23) avec le filetage intérieur (26) sont réalisés sous forme de portion d'extrémité se raccordant à la broche (19), respectivement à la broche d'entraînement (14).

15. Dispositif de moulage par injection électrique selon l'une quelconque des revendications 2 à 14,
**caractérisé en ce que**
le diamètre extérieur de la portion filetée (21) avec le filetage extérieur (27) correspond approximativement au diamètre extérieur de la broche d'entraînement (14), notamment à sa portion filetée (18).

16. Dispositif de moulage par injection électrique selon l'une quelconque des revendications 1 à 15,
**caractérisé en ce que**
le pas de filetage de la portion filetée (18) et de son écrou de broche (20) est supérieur ou inférieur à celui de la portion filetée (21) avec le filetage extérieur (27) et l'écrou associé (23).

17. Dispositif de moulage par injection électrique selon l'une quelconque des revendications 1 à 16,
**caractérisé en ce que**
l'écrou de broche (20) et/ou l'écrou (23) sont réalisés sous forme de vis à recirculation de billes, de vis à rouleaux planétaires, de vis coulissante ou similaire.

18. Dispositif de moulage par injection électrique selon l'une quelconque des revendications 1 à 17,
**caractérisé en ce que**
le moteur d'entraînement (30), en particulier le moteur électrique, entraîne l'écrou de broche (20) par le biais d'un réducteur ou directement avec son rotor (41), qui est traversé coaxialement directement par l'écrou de broche (20) ou un manchon (22) de celui-ci.

19. Dispositif de moulage par injection électrique selon l'une quelconque des revendications 1 à 18,
**caractérisé en ce que**
la broche d'entraînement (14) est connectée ou peut être connectée à la vis de plastification par le biais d'une articulation ou d'un accouplement.

20. Dispositif de moulage par injection électrique selon l'une quelconque des revendications 1 à 19,
**caractérisé en ce que**
les moteurs d'entraînement (30, 31), en particulier des moteurs électriques, sont régulés en termes de vitesse et de couple par des capteurs correspondants (33), des codeurs (34), ou similaires.

21. Dispositif de moulage par injection électrique selon la revendication 20,
**caractérisé en ce**
**qu'**au moins l'un des capteurs (33, 34) peut être entraîné par le biais d'une courroie dentée ou un moyen de transmission similaire par l'écrou de broche associé (20) ou la broche (19).
